Europäisches Patentamt

European Patent Office

Office européen des brevets

(19)

(11) Publication number: 0 340 688
A2

# (12) EUROPEAN PATENT APPLICATION

(21) Application number: 89107812.3

(22) Date of filing: 28.04.89

(51) Int. Cl.⁴: C08F 10/00 , C08F 4/64

(30) Priority: 29.04.88 US 187845

(43) Date of publication of application:
08.11.89 Bulletin 89/45

(84) Designated Contracting States:
AT BE CH DE ES FR GB GR IT LI LU NL SE

(71) Applicant: UNION CARBIDE CORPORATION
39 Old Ridgebury Road
Danbury Connecticut 06817(US)

(72) Inventor: Weintritt, Donald John, Jr.
16010 Brookford Drive
Houston Texas 77050(US)
Inventor: Burdett, Ian Donald
11 Estill Drive
Charleston West Virginia 25314(US)

(74) Representative: Weinhold, Peter, Dr. et al
Patentanwälte Dr. V. Schmied-Kowarzik
Dipl.-Ing. G. Dannenberg Dr. P. Weinhold Dr.
D. Gudel Dipl.-Ing. S. Schubert Dr. P. Barz
Siegfriedstrasse 8
D-8000 München 40(DE)

(54) Process for the preparation of high purity alpha-olefin polymers.

(57) A process for the homopolymerization or copolymerization of one or more alpha-olefins having 2 to 8 carbon atoms comprising contacting alpha-olefin in the gas phase in at least one reaction zone, under polymerization conditions, with a catalyst system comprising (i) a solid catalyst precursor, which includes magnesium, titanium, a halogen which is chlorine, bormine, or iodine, and a polycarboxylic acid ester containing two coplanar ester groups attached to adjacent carbon atoms; (ii) a hydrocarbyl aluminum cocatalyst; and (iii) a silicon compound containing at least one silicon-oxygen-carbon group wherein the atomic ratio of aluminium to silicon is in the range of about 0.5:1 to about 100:1 and to titanium is in the range of about 5:1 to about 300:1,
with the proviso that the residence time of alpha-olefin is in the range of about 1 to about 20 hours and the partial pressure of alpha-olefin is at least about 100 psi.

EP 0 340 688 A2

EP 0 340 688 A2

## PROCESS FOR THE PREPARATION OF HIGH PURITY ALPHA-OLEFIN POLYMERS

### Technical Field

This invention relates to a process for the preparation of high purity homopolymers and copolymers of alpha olefins.

### Background Art

In European patent application 88 107 969.3, which is incorporated by reference herein, a process is provided for producing stereoregular polymers. More particularly, it was found that polymers having an isotactic index of at least 96 percent could be prepared in high yield at high production rates by polymerizing an alpha-olefin in a low pressure gas phase fluidized bed process at temperatures in excess of 50°C employing a catalyst system comprising (i) a solid catalyst precursor, which includes magnesium, titanium, halogen, and an inner electron donor, i.e., a polycarboxylic acid ester containing two coplanar ester groups attached to adjacent carbon atoms; (ii) a hydrocarbylaluminum cocatalyst; and (iii) an outer electron donor or selectivity control agent, i.e., a silicon compound containing a silicon oxygen-carbon linkage wherein the atomic ratio of aluminum to silicon is in the range of about 0.5:1 to about 100:1 and the atomic ratio of aluminum to titanium is in the range of about 5:1 to about 300:1.

In order to produce capacitor grade polymers, it was found that, in processes similar to the above process, post reactor facilities were required to lower the catalyst residuals and ash to acceptable levels. Post-reactor facilities mean higher investment costs, higher operating costs, and a more complex process. Even in the process described above, as conventionally practiced without post-reactor steps, these levels were found to be unsatisfactory in meeting the following maximum prerequisite for capacitor grade polymers: ash at 50 parts per million (ppm) by weight for thin film capacitor applications and chlorine at 10 ppm by weight. Parts per million are based on the weight of the polymer.

### Disclosure of the Invention

An object of this invention, therefore, is to provide a process for the preparation of capacitor grade polymers containing ash and chlorine at levels no higher than those mentioned above with such a process not requiring post-reactor deashing or residue removal.

Other objects and advantages will become apparent hereinafter.

According to the present invention, a process for the homopolymerization or copolymerization of one or more alpha-olefins having 2 to 8 carbon atoms has been discovered comprising contacting alpha-olefin in the gas phase in at least one reaction zone, under polymerization conditions, with a catalyst system comprising (i) a solid catalyst precursor, which includes magnesium, titanium, a halogen which is chlorine, bromine, or iodine, and a polycarboxylic acid ester containing two coplanar ester groups attached to adjacent carbon atoms; (ii) a hydrocarbylaluminum cocatalyst; and (iii) a silicon compound containing at least one silicon-oxygen-carbon linkage wherein the atomic ratio of aluminum to silicon is in the range of about 0.5:1 to about 100:1 and to titanium is in the range of about 5:1 to about 300:1,
with the proviso that the residence time of alpha-olefin is in the range of about 1 to about 20 hours and the partial pressure of alpha-olefin is at least about 100 pounds per square inch.

### Detailed Description

The solid catalyst precursor is prepared by halogenating a magnesium compound of the formula $MgRR'$ wherein R is an alkoxide or aryloxide group and R is an alkoxide or aryloxide group or a halogen with a halogenated tetravalent titanium compound containing at least two halogen atoms in the presence of a halohydrocarbon and a polycarboxylic acid ester containing two coplanar ester groups attached to adjacent carbon atoms. The alkoxide groups can contain 1 to 8 carbon atoms and the aryloxide groups 6 to 10 carbon atoms. The halogen can be chlorine, bromine, or iodine.

Suitable magnesium compounds are magnesium diethoxide, magnesium diisopropoxide, magnesium di-n-butoxide, magnesium diphenoxide, magnesium dinaphthoxide, ethoxy magnesium isobutoxide, ethoxy

2

magnesium phenoxide, naphthoxy magnesium isoamyloxide, ethoxy magnesium bromide, isobutoxy magnesium chloride, phenoxy magnesium iodide, cumyloxy magnesium bromide, and naphthoxy magnesium chloride.

The halogenated tetravalent titanium compound contains at least two halogen atoms and can have up to two alkoxy and/or aryloxy groups. Examples are $TiCl_4$, $TiBr_4$, diethoxy titanium dibromide, isopropoxy titanium triiodide, dihexoxy titanium dichloride, and phenoxy titanium trichloride.

The halohydrocarbon, while preferably aromatic, can be aliphatic or alicyclic. Suitable halohydrocarbons are chlorobenzene, bromobenzene, dichlorobenzene, dichlorodibromobenzene, chlorotoluene, dichlorotoluene, chloronaphthalene, dibromomethane, trichloromethane, 1,2-dichloroethane, trichloroethane, dichlorofluoroethane, hexachloroethane, trichloropropane, chlorobutane, dichlorobutane, chloropentane, trichlorofluorooctane, tetrachloroisooctane, dibromodifluorodecane, dibromocyclobutane, and trichlorocyclohexane.

The halogenated tetravalent titanium compound and the halohydrocarbon preferably contain no more than 12 carbon atoms.

Suitable polycarboxylic acid esters are characterized by a molecularly rigid structure wherein two ester groups are attached to adjacent carbon atoms of the molecule and lie in a single plane. Such esters include polycarboxylic acid esters containing two ester groups which are attached to (a) ortho carbon atoms of a monocyclic or polycyclic aromatic ring, each of said ester groups being further linked to a branched or unbranched chain hydrocarbon radical; (b) vicinal carbon atoms of a non-aromatic monocyclic or polycyclic ring and which lie in a syn configuration with respect to each other, each of said ester groups being further linked to a branched or unbranched chain hydrocarbon radical; or (c) vicinal double bonded carbon atoms of an unsaturated aliphatic compound and which lie in a syn configuration with respect to each other, each of said ester groups being further linked to a branched or unbranched chain hydrocarbon radical.

These polycarboxylic acid esters are derived from a suitable polycarboxylic acid and a monohydric alcohol having a linear hydrocarbon moiety which may be branched or unbranched.

The alcohol component of said polycarboxylic acid esters contain e.g. up to 12 carbon atoms, preferably 3 to 12 carbon atoms. The number of carbon atoms of the polycarboxylic acid moieties is preferably 6 to 20, with the more preferred range of 8 to 16 carbon atoms for corresponding aromatic compounds and 6 to 10 carbon atoms for non-aromatic cyclic compounds. Examples of polycarboxylic esters are dimethyl phthalate, diethyl phthalate, di-n-propyl phthalate, diisopropyl phthalate, di-n-butyl phthalate, diisobutyl phthalate, di-tert-butyl phthalate, diisoamyl phthalate, di-tert-amyl phthalate, dineopentyl phthalate, di-2-ethylhexyl phthalate, di-2-ethyldecyl phthalate, diethyl-1,2-fluorenedicarboxylate, diisopropyl-1-,2-ferrocenedicarboxylate, cis-diisobutyl-cyclobutane-1,2-dicarboxylate, endo-diisobutyl-5-norbornene-2,3-dicarboxylate, and endo-diisobutyl-bicyclo[2.2.2]oct-5-ene-2, -3-dicarboxylate, diisobutyl maleate, and diisoamyl citraconate.

Halogenation of the magnesium compound is effected employing an excess of titanium compound, about 2 mols to about 100 mols of titanium compound per mole of magnesium compound. The halohydrocarbon is employed in an amount sufficient to dissolve the titanium compound and the ester, and to adequately disperse the solid, insoluble magnesium compound. The magnesium compound can be used in an amount of about 0.005 to 2.0 mols of magnesium compound per mol of halohydrocarbon and the ester in an amount of about 0.0005 to about 2.0 mols of ester per mol of titanium compound. The halogenation of the magnesium compound can be carried out in a temperature range of about 60° C to about 150° C over a period of about 0.1 to about 6 hours. The halogenated product is a solid material which can be isolated from the liquid reaction medium by filtration or decantation. After separation, it is treated one or more times with the titanium compound in the same molar ratio to remove residuals and maximize catalyst activity. The halohydrocarbon is usually employed during this treatment to dissolve the titanium compound and disperse the halogenated product. The treatment is preferably carried out twice, the second treatment being in the presence of a polycarboxylic acid halide containing two coplanar acid groups attached to adjacent carbon atoms. About 5 to about 200 millimols of acid halide are generally employed per gram atom of magnesium. Suitable acid halides include phthaloyl dichloride, 2,3-naphthalenedicarboxylic acid dichloride, endo-5-norbornene-2,3-dicarboxylic acid dichloride, maleic acid dichloride, and citraconic acid dichloride.

After the solid halogenated product has been treated one or more times with additional halogenated tetravalent titanium compound, it is separated from the liquid reaction medium, washed with an inert hydrocarbon to remove unreacted titanium compounds, and dried. The final washed product suitably has a titanium content of about 0.5 percent by weight to about 6.0 percent by weight. The atomic ratio of titanium to magnesium in the final product is in the range of about 0.01:1 to about 0.2:1. The polycarboxylic acid ester is present in a molar ratio of ester to magnesium of about 0.005:1 to about 10:1.

3

The hydrocarbyl aluminum cocatalyst can be represented by the formula $R_3Al$ wherein each R is an alkyl, cycloalkyl, aryl, or hydride radical; at least one R is a hydrocarbyl radical; two or three R radicals can be joined in a cyclic radical forming a heterocyclic structure; each R can be alike or different; and each R, which is a hydrocarbyl radical, has 1 to 20 carbon atoms, and preferably 1 to 10 carbon atoms. Further, each alkyl radical can be straight or branched chain and such hydrocarbyl radical can be a mixed radical. i.e., the radical can contain alkyl, aryl, and/or cycloalkyl groups. Examples of suitable radicals are: methyl, ethyl, propyl, isopropyl, butyl, isobutyl, tert-butyl, pentyl, neopentyl, hexyl, 2-methylpentyl, heptyl, octyl, isooctyl, 2-ethylhexyl, 5,5-dimethylhexyl, nonyl, decyl, isodecyl, undecyl, dodecyl, phenyl. phenethyl, methoxyphenyl, benzyl, tolyl, xylyl, naphthyl, naphthal, methylnaphthyl, cyclohexyl, cycloheptyl, and cyclooctyl.

Examples of suitable hydrocarbyl aluminum compounds are as follows: triisobutylaluminum, trihexylaluminum, di-isobutylaluminum hydride, dihexylaluminum hydride, isobutylaluminum dihydride, hexylaluminum dihydride, di-isobutylhexylaluminum, isobutyl dihexylaluminum, trimethylaluminum, triethylaluminum, tripropyaluminum, triisopropyaluminum, tri-n-butylaluminum, trioctylaluminum, tridecylaluminum, tridodecylaluminum, tribenzylaluminum, triphenylaluminum, trinaphthyaluminum, and tritolylaluminum. The preferred hydrocarbyl aluminums are triethylaluminum, triisobutylaluminum, trihexylaluminum, di-isobutylaluminum hydride, and dihexylaluminum hydride.

The silicon compounds include compounds having the formula $R_aSiY_bX_c$ wherein R is a hydrocarbon radical having 1 to 20 carbon atoms; Y is -OR or -OCOR; and X is hydrogen, chlorine, bromine, or iodine; each R is alike or different; a is an integer from 0 to 3; b is an integer from 1 to 4; c is 0 or 1; and a + b + c = 4. R can be substituted or unsubstituted. Silicon compounds containing Si-O-Si groups can also be employed providing that at least one Si-O-C group is present. An example of a useful silicon compound is diphenyldimethoxysilane. Other examples are ditertiarybutyldimethyoxysilane, dimethoxysilane, diethoxysilane and diethyldimethoxysilane.

The polymer is prepared in the gas phase, generally, by continuously contacting the catalyst system with alpha-olefin in one or more fluidized bed reactors such as that described in United States Patent 4,482,687 or another conventional reactor for the gas phase production of, for example, polypropylene or propylene copolymers. The bed is usually made up of the same granular resin that is to be produced in the reactor. Thus, during the course of the polymerization, the bed comprises formed polymer particles, growing polymer particles, and catalyst particles fluidized by polymerizable and modifying gaseous components introduced at a flow rate or velocity sufficient to cause the particles to separate and act as a fluid. The fluidizing gas is made up of the initial feed, make-up feed, and cycle (recycle) gas, i.e., monomer and, if desired, modifiers and/or an inert carrier gas.

The essential parts of the reactor are the vessel, the bed, the gas distribution plate, inlet and outlet piping, a compressor, a cycle gas cooler, and a product discharge system. In the vessel, above the bed, there is a velocity reduction zone, and in the bed, a reaction zone. Both are above the gas distribution plate.

The fluidized bed, or other gas phase, reactor is operated at a temperature in the range of about 30°C to about 120°C and preferably at a temperature in the range of about 50°C to about 100°C. The operating pressure is in the range of about 300 psig to about 1100 psig or higher and preferably about 425 psig to about 800 psig. The alpha-olefin partial pressure is in the range of about 100 to about 1000 psi or higher. The preferred alpha-olefin partial pressure is in the range of about 300 psi to about 750 psi. The partial pressure of alpha-olefin is considered to be the total partial pressure of all of the alpha-olefins used in the process. The residence time of the alpha-olefin in the reactor is in the range of about 1 to about 20 hours and preferably about 3 to about 12 hours. The velocity of the fluidizing gas is in the range of about 0.1 to about 5.0 feet per second or higher and preferably about 0.5 to about 2.0 feet per second. Hydrogen or another chain transfer agent can be used in the process. The mole ratio of hydrogen to alpha-olefin used in the fluidized bed reactor is in the range of about 0.0005:1 to about 0.5:1 and is preferably in the range of about 0.001:1 to about 0.5:1. This translates into a hydrogen partial pressure in the range of about 0.05 psi to about 500 psi and preferably about 0.3 psi to about 375 psi. The balance of the operating pressure utilized in the reactor, i.e., after the partial pressure of one or more alpha-olefins and the hydrogen partial pressure are considered, can be made up by using an inert gas such as nitrogen.

Where it is desired to produce a homopolymer such as polypropylene, one fluidized bed reactor is used. Other polymers such as ethylene/propylene copolymers can be provided in one fluidized bed reactor, or, where desired, one or more fluidized bed reactors can be operated in series with the first.

In subject process, the components of the catalyst system are maintained in an amount such that the atomic ratio of aluminum in the cocatalyst to silicon in the selectivity control agent is about 0.5:1 to about 100:1, and preferably about 2:1 to about 50:1, and the atomic ratio of aluminum in the cocatalyst to titanium in the solid catalyst component is about 5:1 to 300:1, and preferably from about 10:1 to about 200:1.

4

Useful alpha-olefins preferably do not contain any branching on carbon atoms closer than two carbon atoms removed from the double bond. Examples of suitable alpha-olefins include ethylene, propylene, 1 butene, 1-hexene, 4 methylpentene-1, 1 heptene, and 1 octene. The process can be used to prepare homopolymers or copolymers based on two or more monomers. Generally, the copolymer is based on ethylene or propylene with up to 20 mol percent of a second alpha-olefin.

The invention is illustrated by the following examples:

## Example 1

### Preparation of Solid Catalyst Component

To a solution of 7 milliliters of titanium tetrachloride (120 grams, 0.64 mol) in 3.7 liters of chlorobenzene are added, in succession, 180 milliliters of diisobutyl phthalate (187 grams, 0.67 mol), 590 grams (5.2 mols) of magnesium diethoxide, and a solution of 4.7 liters of titanium tetrachloride (8100 grams, 43 mols) in 1.2 liters of chlorobenzene. A temperature of 20° C to 25° C is maintained during these additions. The resulting mixture is then heated to 110° C with stirring, the temperature being maintained for 1 hour. At the end of this time, the mixture is filtered while hot. A solid material is collected.

The sold material is then slurried in a solution of 4.7 liters of titanium tetrachloride (8100 grams, 43 mols) in 1.2 liters of chlorobenzene at room temperature. A solution of 45 grams (0.22 mol) of phthaloyl dichloride in 3.7 liters of chlorobenzene is added to the slurry at room temperature, and the resulting slurry is then heated to 110° C with stirring, the temperature being maintained for 30 minutes. At the end of this time, the mixture is filtered while hot. A solid material is collected.

The solid material is reslurried in a solution of 4.7 liters of titanium tetrachloride (8100 grams, 43 mols) in 1.2 liters of chlorobenzene at room temperature. An additional 3.7 liters of chlorobenzene is then added to the slurry at room temperature, and the resulting slurry is heated to 110° C with stirring, the temperature being maintained in 30 minutes. At the end of this time, the mixture is filtered while hot. A solid material is collected.

The solid material is reslurried once again in a solution of 4.7 liters of titanium tetrachloride (8100 grams, 43 mols) in 1.2 liters of chlorobenzene at room temperature. An additional 3.2 liters of chlorobenzene is then added to the slurry at room temperature, and the resulting slurry is heated to 110° C with stirring, the temperature being maintained for 30 minutes. At the end of this time, the mixture is filtered while hot. The residue is washed 6 times with 500 milliliter portions of hexane at 25° C, and then dried under a nitrogen purge. The product weighs about 500 grams.

## Example 2

The solid catalyst component prepared in Example 1 is continuously fed into a fluidized bed reactor as a 30 percent by weight dispersion in mineral oil. Simultaneously, and continuously, triethylaluminum cocatalyst as a 2.5 percent by weight solution in isopentane and diphenyldimethoxysilane (selectivity control agent) as a 1.0 percent by weight solution in isopentane are also added to the reactor.

Sufficient solid catalyst component, cocatalyst, and selectivity control agent are introduced into the reactor to maintain an atomic ratio of aluminum to titanium of 30:1.

Propylene, hydrogen, and nitrogen are added to maintain a total pressure of 425 psig. The reactor in this example is a pilot scale model, 14 inches in diameter and 28 feet in height. It is operated in the condensing mode. Condensing mode operation is described in United States Patents 4, 543,399 and 4,588,790 (both incorporated by reference herein) wherein the recycle gas stream is intentionally cooled to a temperature at or below the dew point of the recycle gas stream to produce a two-phase gas/liquid mixture under conditions such that the liquid phase of said mixture will remain entrained at least from the point of entry until it passes into the fluidized bed. A substantial increase in catalyst productivity is thus obtained, as well as other advantageous effects on operations and polymer physical properties.

Additional conditions and results are set forth in Table I.

5

Examples 3 to 9

Example 2 is repeated except as follows:

Propylene, hydrogen, and nitrogen are added to maintain a total pressure of 535 to 800 psig.

The reactor is 440 centimeters in diameter and the fluidized bed has a height of 50 feet. The reactor is operated in the condensing mode.

Variables and results are set forth in Table II.

Notes with respect to Tables I and II:

1. The partial pressure of propylene is given in pounds per square inch (psi).

2. The partial pressure of hydrogen is given in psi.

3. The temperature maintained in the reactor is given in degrees Centigrade (°C).

4. The residence time of each pound of propylene in the reactor is given in hours (hrs).

5. The condensing mode titanium reduction factor is given.

6. The production rate of homopolymer of propylene is given in pounds per hour (lbs/hr).

7. The parts per million (ppm) parts of propylene homopolymer (by weight) of titanium is given. The ppm titanium are determined by inductively coupled plasma spectroscopy.

8. The parts per million parts of propylene homopolymer (by weight) of aluminum is given. The ppm of aluminum are determined by inductively coupled plasma spectroscopy.

9. The parts per million parts of propylene homopolymer (by weight) of chlorine (in chloride form) is given. The ppm of chlorine are determined by X-ray fluorescence.

10. The parts per million parts of propylene homopolymer (by weight) of ash is given. The ppm of ash are determined by ASTM D 229.49.

11. Melt flow rate is determined under ASTM D-1238, condition L. It is measured at 230°C with a 2160 gram load and reported as grams per 10 minutes (g/10 min). The melt flow rate for examples 3 to 8 is 1.8 to 2.3 grams per 10 minutes.

Table I

| | |
|---|---|
| Propylene partial pressure | 409 psi |
| Hydrogen partial pressure | 0.5 psi |
| Temperature | 80°C |
| Residence time | 20 hours |
| Production rate (maximum) | 10 pounds per hour |
| Titanium residue | 0.37 ppmw |
| Aluminum residue | 6.2 ppmw |
| Chlorine residue | 9.2 ppmw |
| Total ash residue | 30 to 40 ppmw |
| Melt flow | 2.3 grams per 10 minutes |

6

Table II

| Example | C$_3$ partial pressure (psi) | H$_2$ partial pressure (psi) | temperature (°C) | residence time (hrs) | Ti reduction factor | C$_3$ homopolymer (lbs/hr) | Ti (ppm) | Al (ppm) | Cl (ppm) | ash (ppm) |
|---------|------|------|-----|----|-----|-------|------|-----|------|----|
| 3 | 500 | 2.5 | 80 | 6 | 1.0 | 8150 | 0.6 | 10 | 15 | 42 |
| 4 | 500 | 2.5 | 80 | 6 | 0.6 | 8150 | 0.36 | 6.1 | 7.2 | 24 |
| 5 | 500 | 2.5 | 80 | 12 | 0.6 | 8150 | 0.32 | 5.4 | 6.4 | 21 |
| 6 | 750 | 3.75 | 100 | 9 | 0.6 | 10850 | 0.25 | 4.2 | 5.0 | 17 |
| 7 | 500 | 2.5 | 80 | 6 | 0.6 | 16300 | 0.38 | 6.4 | 7.6 | 25 |
| 8 | 500 | 2.5 | 80 | 9 | 0.6 | 10850 | 0.34 | 5.7 | 6.8 | 22 |

EP 0 340 688 A2

**Claims**

1. A process for producing olefin polymers comprising polymerizing one or more gaseous alpha-olefins in a gas phase reactor at an alpha-olefin partial pressure of at least about 100 psi during a residence time of about 1 to about 20 hours in the presence of a catalyst system comprising:
(i) a solid catalyst precursor which includes magnesium, titanium, halogen, and a polycarboxylic acid ester containing two coplanar ester groups attached to adjacent carbon atoms;
(ii) a hydrocarbyl aluminum compound; and
(iii) a silicon containing compound which includes at least one carbon atoms bonded through oxygen to silicon
in amounts such that the atomic ratio of aluminum to silicon in said catalyst system is in the range of from about 0.5:1 to about 100:1 and the atomic ratio of aluminum to titanium is in the range of from about 5:1 to about 300:1.

2. The process defined in claim 1 wherein the olefin polymer produced is a propylene homopolymer or a copolymer of ethylene and propylene.

3. The process defined in claim 1 wherein the alpha-olefin is propylene or ethylene and propylene.

4. A process for the homopolymerization or copolymerization of one or more alpha-olefins having 2 to 8 carbon atoms comprising contacting alpha-olefin in the gas phase in at least one reaction zone, under polymerization conditions, with a catalyst system comprising (i) a solid catalyst precursor, which includes magnesium, titanium, a halogen which is chlorine, bromine, or iodine, and a polycarboxylic acid ester containing two coplanar ester groups attached to adjacent carbon atoms; (ii) a hydrocarbyl aluminum cocatalyst, e.g. trialkyl aluminum, and (iii) a silicon compound containing at least one silicon-oxygen-carbon group wherein the atomic ratio of aluminum to silicon is in the range of about 0.5:1 to about 100:1, e.g. about 2:1 to about 50:1, and to titanium is in the range of about 5:1 to about 300:1, e.g. about 10:1 to about 200:1, with the proviso that the residence time of alpha-olefin is in the range of about 1 to about 20 hours, e.g. in the range of about 3 to about 12 hours and the partial pressure of alpha-olefin is at least about 100 psi.

5. The process defined in claim 4 wherein the partial pressure of alpha-olefin is no greater than about 1000 psi. e.g. in the range of about 400 to about 750 psi.

6. The process defined in one or both of the claims 4-5 wherein the process is carried out continuously and the reaction zone is a fluidized bed.

7. The process defined in one or more of the claims 1-6 wherein at least one alpha-olefin is propylene.

8. The process defined in one or more of the claims 4-7 wherein the solid catalyst precursor is obtained by halogenating a magnesium compound having the formula MgRR' wherein R is an alkoxide or aryloxide group and R' is R or halogen with a halogenated tetravalent titanium compound containing at least two halogen atoms in the presence of a halohydrocarbon and a polycarboxylic acid ester containing two coplanar ester groups attached to adjacent carbon atoms.

9. The process defined in one or more of the claims 4-8 wherein the silicon compound has the formula $R_aSiY_bX_c$
wherein R is a hydrocarbon radical having 1 to 20 carbon atoms; Y is -OR or -OCOR; and X is hydrogen, chlorine, bromine, or iodine; each R is alike or different; a is an integer from 0 to 3; b is an integer from 1 to 4; c is 0 or 1; and a + b + c = 4.

10. The process defined in one or more of the claims 4-9 wherein the magnesium compound is magnesium diethoxide, the halogenated tetravalent titanium compound is titanium tetrachloride, the halohydrocarbon is chlorobenzene, and the polycarboxylic acid is diisobutyl phthalate.

11. The process defined in one or more of the claims 4-10 wherein the silicon compound is diphenyldimethoxysilane.

12. An olefin polymer produced in accordance with the process of one or more of the claims 1-11 having an ash content of below 50 ppm and a halogen content below 10 ppm by weight.